# EUROPEAN PATENT APPLICATION

(11) **EP 1 918 797 A1**
(43) Date of publication of application: **07.05.2008**
(21) Application number: 06076953.6
(22) Date of filing: 31.10.2006
(51) Int. Cl.: G05D 1/02

(54) **Inventory management system**

(71) Applicant: Nederlandse Organisatie voor Toegepast-Natuurwetenschappelijk Onderzoek TNO, 2628 VK Delft (NL)
(72) Inventor: Baan, Jan, 2743 HG Waddinxveen (NL); Zeelen, Ronald, 2614 TB Delft (NL)
(74) Representative: van Loon, C.J.J.

(57) **Abstract**

The location of objects in a building is recorded in the inventory management system. The objects are moved through the building with a vehicle. The vehicle transmits wireless messages indicating actions of the vehicle, such as loading or unloading of objects. A camera captures images of an area in which the vehicle moves. Positions of the vehicle are automatically detected from the captured images. The information about locations of objects is updated using the detected positions at time points indicated by the messages. In an embodiment the actions of the vehicle are signalled with light signals and picked up via the camera.

## Description

The invention relates to an inventory management system using an image processing system.

In an inventory management system it is desirable to track movement of objects and to record their current location. Conventionally this is done by human controlled recording of object locations, sometimes with the assistance of a machine, such as a bar code scanner to identify objects that are placed at a location.

US 2005192702 discloses management of a container terminal. A loading vehicle transports a container to a loading point, from which it is transported by a stacking crane. Camera's are used to recognize the loading vehicle (or the container). Also the position of the container is measured, in order to control connections to the container.

EP 0687964 discloses a vehicle steering system that uses a camera and image processing to determine the position of a vehicle. The vehicle carries a light source. The image position of light from the light source is used to determine the location of the vehicle.

Neither of these documents allows for inventory management when objects are loaded or unloaded at arbitrary locations on a shop floor. More generally, the image processing systems disclosed in these publications are not useful for gathering arbitrary control information about objects.

Among others it is an object to provide for a method and system for inventory management that wherein loading and/or unloading of objects at arbitrary locations can be automatically managed.

Among others it is an alternative object to provide for an image processing system and method that provides for exchange of control information about objects.

An inventory management system according to claim 1 is provided for. Herein a vehicle moves objects and transmits messages indicating actions of the vehicle. A computing system detect positions of the vehicle from images captured by a camera and update information about locations of objects using the detected positions at time points indicated by the messages. Thus, image data is used to determine the locations of objects under the direction of messages from the vehicle, such as messages that the vehicle is loading or unloading the object. There is no need to rely on (or only on) a positioning system such as the GPS system to detect the positions of the vehicles. The camera may be mounted for example on a ceiling over an area including location for storing the objects. Even if the ceiling intercepts GPS signals detection of the position of vehicles is possible.

In an embodiment light modulated with a temporal modulation pattern is used to signal the messages and the computing system retrieves the messages from the images captured by the camera. Thus, no separate transmission system is needed for the messages.

Preferably the position of the vehicle is determined from visible aspects of the vehicle. In a further embodiment the position of the vehicle for updating the information about the location of an object is determined from an image position where the temporal modulation pattern is detected. Thus, there is no need to rely on (or only on) spatial image feature recognition to detect the a position of the vehicle.

In an embodiment the update of the information about the location of an object in response to a message in a modulation pattern uses the image position where that modulation pattern is detected. Thus a minimum susceptibility for errors is realized. Alternatively, a position may be used where another modulation patterns from the vehicle is detected, for example if this pattern is received at a time point for which it is indicted that an object is unloaded at that time point.

The messages may contain information about the identity of the vehicle and/or the objects. Thus a more robust system can be realized.

These and other objects and advantageous aspects will become apparent from a description of exemplary embodiments, using the following figures.
Figure 1 schematically shows business premises;
Figure 2 shows an inventory management system;
Figure 3 shows vehicle system.

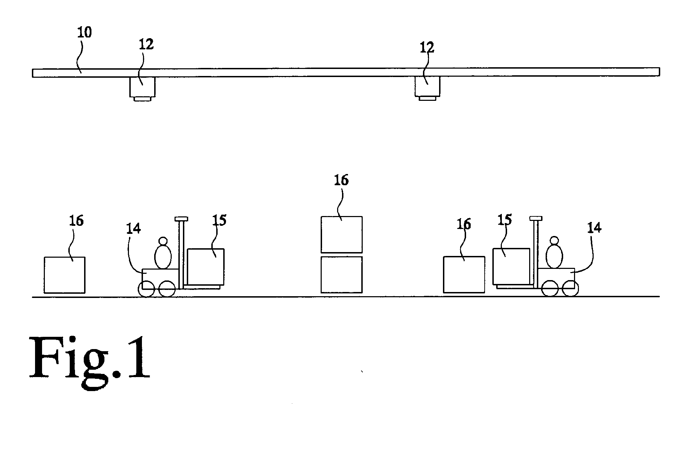

Figure 1 schematically shows business premises, comprising a hall with a ceiling 10 to which camera's 12 are attached. On the floor of the hall vehicles 14 are shown to transport objects 15 at various locations in the hall further objects 16 are stored. In addition the hall may contain machines (not shown) for manufacturing or processing the objects.

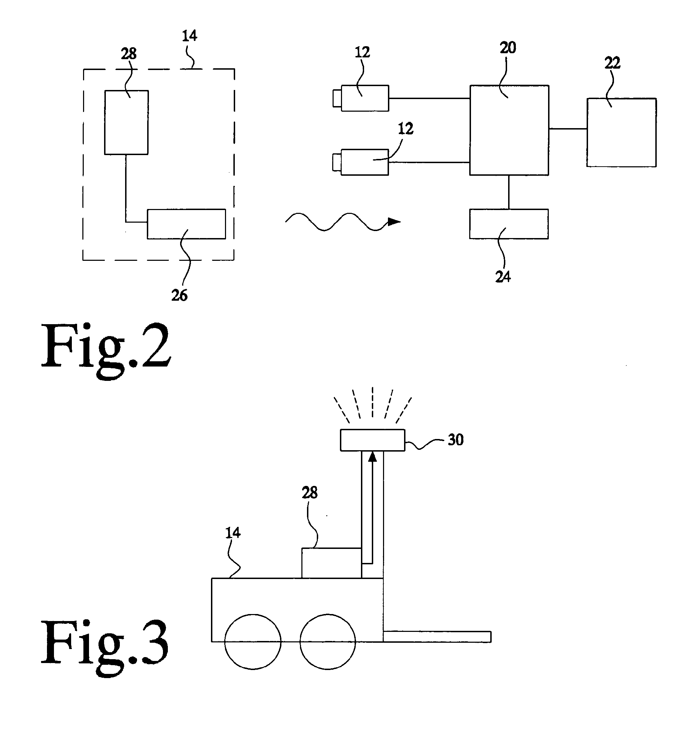

Camera's 12 are part of an inventory management system for the premises. Figure 2 shows such an inventory management system, comprising camera's 12, a computing system 20, a storage device 22 and a wireless signal receiver 24. In addition a part of an on-board system of a vehicle is shown, comprising an control interface 28 and a wireless signal transmitter 26. Computing system 20 is coupled to camera's 12, storage device 22 and signal receiver. Control interface 28 and signal transmitter 26 are coupled to each other and located on board a vehicle 14. Preferably, each vehicle in the hall has its own control interface 28 and signal transmitter 26.

In operation vehicles 14 drive around the hall to move objects 15, 16 in and/or out of the hall and/or between different locations in the hall. The inventory management system is used to track the location of the objects 15, 16. Camera's 12 produce signals representing images of the floor of the hall, including vehicles 14. The signals are transmitted to computing system 20.

Computing system 20 processes the signals to determine the image position of vehicles 14 in the images. Methods of determining the position of vehicles, from signals representing images are known per se and will therefore not be described here. In an embodiment vehicles 14 may be provides with marks or marking patterns at locations that are visible from the camera's to facilitate detection of the vehicles and measurement of their location in the images. As an alternative, if the objects are suitable for this, such markings may be provided on the objects and that the position of the vehicle may be determined from the object. However, this may require more complicated detection, because there may be many more objects than vehicles (not only at any one time but also in the course of time). For example it may be necessary to use the computing system to visually identify individual objects in camera images, which requires much more information than identifying a vehicle, or to determine whether a detected object is moving in order to establish that the object is associated with a vehicle.

Although an embodiment with a plurality of camera's 12 has been shown, it should be appreciated that one camera 12 may suffice if this camera has a sufficient field of view to cover all locations where objects 15, 16 may be stored.

From the image position of vehicles 14 on the floor of the hall is determined, using information about the positions of camera's 12, their orientation and the fact that vehicles 14 are located on the floor (the vehicles 14 of this embodiment don't fly). It may be noted that alternatively, position of vehicles could be measured using GPS (Global Positioning System) receivers in the vehicles, but this system may not work within halls, for example when ceiling 10 comprises metal parts. Also GPS location measurement may not be sufficiently accurate. As another alternative a system of radio frequency beacon transmitters and receivers in the hall may be used, but this requires a more complex system than camera's 12.

When a vehicle 14 loads or unloads an object 15, 16 the operator of the vehicle 14 interacts with the control interface 28 of the vehicle to indicate loading or unloading. Control interface 28 is configured to receive such interactions and to cause wireless transmitter 26 to transmit a message reporting the interaction to wireless receiver 24, together with an identifier that identifies the vehicle 14.

Computing system 20 reads information about received messages from wireless receiver 24. Computing system 20 uses this information to update inventory data. The inventory data is stored in storage device 22. In an embodiment the inventory data comprises a set of records, each identifying a respective object 15, 16 and a current location of the object. A copy of the records or part thereof may be stored in computer system 20 itself.

A simple embodiment will be described first for the sake of illustration. When computing system 20 receives information from wireless receiver that an identified vehicle is loading an object, computer system 20 obtains the location of the identified vehicle 14 that was determined using camera's 12. In an embodiment the computer system 20 searches the records to identify an object stored at the location of the vehicle 14. Computer system 20 then records that this object has been loaded by the vehicle 14 and invalidates the location of the object in the record.

When computing system 20 receives information from wireless receiver that an identified vehicle is unloading an object, computer system 20 obtains the location of the identified vehicle 14 that was determined using camera's 12. Computer system 20 updates the record for the object that was last loaded onto the vehicle to this location and records that the object has been unloaded.

Preferably messages about loading and unloading are sent at the time of loading and unloading, thus indicating the time of loading or unloading. But it should be appreciated that alternatively such messages may be sent at a different time, as long as they indicate the time of loading or unloading. Such an indication is possible for example by means of a fixed relation between the time of transmission and the time of loading or unloading, or by transmitting information about the time of loading or unloading. When the messages about loading and unloading are sent at the time of loading and unloading, the measured position of the vehicle at the indicated time of loading and unloading may be used, to update the location of an object.

For this purpose the position of the vehicle may be monitored continuously using the camera and recorded, or the images from the camera may be recorded and the image for an indicated time may be used to detect the position of the vehicle at that time. When the indicated time is in the future, the corresponding future detected position may be used. As an alternative a potential time of unloading may be detected from a detection that the vehicle has not changed position during at least a predetermined duration of time, and a message about loading and unloading within a predetermined time-interval of such a detection may be taken to apply to the position that did not change in the predetermined duration of time. Alternatively the position at the indicated time of loading or unloading may be used.

It should be appreciated that several measures may be taken to increase the robustness of this method. In an embodiment objects 15, 16 may be provided with identifying markers, such as bar codes or dot codes and vehicles 14 may be provided with readers for such markers coupled to wireless transmitter 26 for transmission of object identifying information based on the markers. In this case computer system does not need to search its records to identify the object.

In another embodiment unique marks or marking patterns may be provided on vehicles 14. In this embodiment computing system 20 uses these unique marks or marking patterns to identify individual vehicles in the images from camera's. As an alternative, or in addition, the vehicle identity may be maintained by tracking the image location of originally identified vehicles, however this is less robust.

Although in the simple embodiment it was assumed that objects 15, 16 are not stacked on the floor of the hall or in vehicles 14, it should be appreciated that stacking can easily be accounted for. As an example it may be recorded, e.g. in storage device 22, in which order the objects are stacked on the floor. In this case computing system can identify objects by assuming that a topmost object from a stack at a location is loaded when an object is loaded at the location of the stack. Similarly, when an object is unloaded at the location of a stack, it may be recorded that the object is unloaded to the top of that stack. A similar technique can be used for stacking on the vehicles, by recording an order of stacking on each vehicle 14.

As another example, a detector for automatically detecting and signalling loading or unloading of objects by a vehicles 14 may be used in a vehicle 14. As another example, camera's may be used to detect loading and unloading of objects by vehicles. As a further example a handshake protocol, involving transmissions back and forth between computing system and control interface 28 may be used to ensure more reliable message transmission; in this case the inventory management system preferably also comprises a wireless transmitter and an on-board vehicle system comprises a wireless receiver.

Figure 3 shows an on-board vehicle system with a light source 30 acting as wireless transmitter for signalling loading and unloading by means of a temporally modulated light intensity pattern. As an alternative a temporally changing wavelength distribution and/or polarization modulation may be used (camera's 12 being provided with spectral filters or polarizers to detect the modulation). Preferably the modulation pattern is realized by causing light source to emit light in a sequence of modulation states (with respective, different intensity, spectral distribution and/or polarization for example). The modulation pattern is intended to be received by camera's 12, and therefore changes between modulation states preferably occur at a rate equal to or less than the frame rate of the camera's (in an example less than or equal to 50Hz) and preferably at less than half the frame rate. Light source 30 may effectively be a point source, but alternatively a source with a predetermined spatial non-point shape may be used to aid in verification.

In an embodiment the modulation pattern comprises a synchronization pattern which may be the same for all vehicles 14, a header part, which identifies the vehicle 14 transmitting the pattern, and a payload part that indicates the action taken by the vehicle 14 (loading or unloading) or other information. Optionally error correction or detection information may be modulated as well. Light source 30 is located on vehicle 14 so that light emitted by light source 30 is visible from above, where camera's 12 are located. In this embodiment camera's 12 act as wireless receivers.

Computing system 20 analyses sequences of the images to detect transmission of a modulation pattern from a location in the hall or along a track of locations corresponding to a moving vehicle. In an embodiment computing system 20 monitors modulation patterns in the pixel values for each pixel from camera's 12 until a pattern matching the synchronization pattern is detected for a pixel. Computing system 20 then reads the subsequent modulation pattern for the pixel and decodes the identification of the vehicle 14 and the action. In a further embodiment, wherein light source 30 is configured to emit light from a predetermined shape, computing system 20 may also test the shape of an image area in which the modulation pattern is detected to verify that a message is received and not an accidental light signal.

It should be appreciated that such a modulation pattern also provides for the measurement of the image position of the vehicle 14, which follows from the position of the pixel at which the modulation pattern is detected, so that no further object recognition is needed to measure the position.

In a further embodiment computing system 20 is configured to detect modulation patterns from moving vehicles. In this embodiment computing system 20 monitors for the modulation pattern in the pixel values from groups of adjacent pixels. Preferably, when a modulation pattern is detected computing system 20 verifies that the modulation pattern is detected along a coherent track, temporally adjacent parts of the modulation pattern being detected at adjacent pixels.

It should be appreciated that other methods of signalling could be used. For example the synchronization pattern and/or the header could be omitted if the modulation pattern signalling the action is sufficient to detect messages and/or if the identity of the vehicle is determined in another way (e.g. by recognizing a visual marker on the vehicle from pixels in a region at a predetermined relative distance from the pixel at which the modulation pattern is detected). Preferably the modulation pattern comprises the synchronization pattern, the header and the payload part successively in time. Alternatively the sequence of the header and the payload may be exchanged. In another embodiment, when a shifting set of images is kept stored in computing system 20, the synchronization pattern may even be transmitted after the header and/or payload. In this case, when computing system 20 detects the synchronization pattern for a pixel it consults the pixel in stored preceding images to retrieve the payload and optionally the header.

Although an application to inventory management has been described it should be appreciated that signalling by means of a light modulation pattern from which the vehicle location is determined can be applied outside inventory management as well. This provides for a simple way of combined position detection and transfer of message information from an object such as a vehicle.

However, it should be appreciated that instead of a light source 30 and a camera 12 other means could be used to transmit information such as whether a vehicle is loading or unloading. For example, a radio frequency transmitter and receiver, infrared or ultrasonic transmitter and receiver could be used.

Although an embodiment has been shown where records are kept about the current locations of objects it should be appreciated that a historical record may be kept as well.

Computing system 20 may be implemented as a computer programmed with a program of instructions to process image signals from camera's 12 and to maintain information about the location of the objects. Storage device 22 may be a non-volatile storage device such as a hard disk, or a volatile memory such as a RAM. Alternatively, computer system 20 may comprises a plurality of processing devices, for performing different tasks of image processing and maintaining information. The processing devices may be programmable devices programmed to perform these tasks or hardware circuits hardwired to do so.

## Claims

1. An inventory management system, comprising
- a vehicle for moving objects, the vehicle comprising a control interface configured to generate messages indicating actions of the vehicle and a wireless transmitter coupled to the control interface for transmitting the messages;
- a camera directed at a floor on which the vehicle is able to move;
- a computing system coupled to the camera and configured to detect positions of the vehicle from images captured by the camera and to receive the messages from the wireless transmitter, the computing system being configured to update information about locations of objects using the detected positions at time points indicated by the messages.

2. An inventory management system according to claim 1, wherein the wireless transmitter comprises a light source located on the vehicle to be visible from the camera and configured to transmit the messages as temporally modulation patterns of transmitted light, the computing system being configured to receive the messages from images captured by the camera.

3. An inventory management system according to claim 2, wherein the computing system is configured to detect the position of the vehicle from a pixel location in the images from the camera where at least one of the modulation patterns is detected.

4. An inventory management system according to claim 3, wherein the computing system is configured to update information about at least one of the locations of objects in response to at least one of the modulation patterns, using a location determined from an image position where that at least one of the modulation patterns has been detected.

5. An inventory management system according to any one of the preceding claims, wherein the control interface of the vehicle is configured to include information identifying the vehicle in at least one of the messages and wherein the computing system is configured to associate the vehicle with an object and to update the location of the object associated with the vehicle that is identified in a message in response to said at least one of the messages.

6. An inventory management system according to any one of the preceding claims, wherein the camera is mounted on a ceiling over an area including location for storing the objects.

7. An inventory management system part, for maintaining information about locations of object that are moved by at least one vehicle that is configured to generate messages indicating actions pertaining to the objects, the inventory management system part comprising
- a camera;
- a computing system coupled to the camera and configured to detect positions of the vehicle from images captured by the camera and to receive the messages from the vehicle, the computing system being configured to update information about locations of objects using the detected positions at time points indicated by the messages.

8. An inventory management system part according to claim 7, wherein the computing system is configured to receive the messages from images captured by the camera.

9. An inventory management system part according to claim 8, wherein the computing system is configured to detect the position of the vehicle from a pixel location in the images from the camera where at least one of the modulation patterns is detected.

10. A vehicle comprising a control interface configured to generate messages indicating actions of the vehicle and a light source located on the vehicle to be visible from above, the control interface being configured cause the light source to transmit the messages indicating actions of the vehicle as temporally modulation patterns of transmitted light.

11. An inventory management method, comprising
- moving an object with a vehicle;
- transmitting wireless messages indicating actions of the vehicle from the vehicle;
- receiving the wireless messages in a computing system;
- capturing images of an area in which the vehicle moves;
- detecting positions of the vehicle from the captured images;
- updating information about locations of objects using the detected positions at time points indicated by the messages.

12. An inventory management method according to claim 11, wherein the step of transmitting comprises transmitting light modulated with a temporal modulation pattern in a direction of the camera and wherein the step of receiving comprises receiving the messages from the captured images.

13. An inventory management method according to claim 12, wherein the step of detecting positions comprises detecting the position of the vehicle from a pixel location in the captured images from the camera where the modulation pattern is detected.

14. A computer program product comprising a program of instructions which, when executed by a programmable computer, will cause the programmable computer to
- detect positions of a vehicle from images captured by a camera;
- receive messages from the vehicle, and
- update information about locations of objects using the detected positions at time points indicated by the messages.
